**Europäisches Patentamt**

**European Patent Office**

**Office européen des brevets**

(11) Publication number : **0 338 078 B1**

(12) **EUROPEAN PATENT SPECIFICATION**

(45) Date of publication of patent specification :
20.05.92 Bulletin 92/21

(51) Int. Cl.⁵ : **B23K 9/12**

(21) Application number : **88907367.2**

(22) Date of filing : **18.08.88**

(86) International application number :
**PCT/JP88/00819**

(87) International publication number :
**WO 89/01381 23.02.89 Gazette 89/05**

(54) **WEAVING WELDING WITH WELDING ROBOT.**

(30) Priority : **19.08.87 JP 204081/87**

(43) Date of publication of application :
**25.10.89 Bulletin 89/43**

(45) Publication of the grant of the patent :
**20.05.92 Bulletin 92/21**

(84) Designated Contracting States :
**DE FR GB**

(56) References cited :
**JP-A-54 262 616**
**JP-A-60 124 475**

(73) Proprietor : **FANUC LTD.**
**3580, Shibokusa Aza-Komanba, Oshino-mura**
**Minamitsuru-gun, Yamanashi 401-05 (JP)**

(72) Inventor : **TOYODA, Kenichi**
**1-17-25, Shinmei**
**Hino-shi Tokyo 191 (JP)**
Inventor : **TORII, Nobutoshi**
**Room 308 Fuyohaitsu 65-4, Takakura-cho**
**Hachioji-shi Tokyo 192 (JP)**
Inventor : **MORIKAWA, Shigehiro**
**411-2, Kamiechi**
**Atsugi-shi Kanagawa 243 (JP)**

(74) Representative : **Billington, Lawrence Emlyn et al**
**HASELTINE LAKE & CO Hazlitt House 28**
**Southampton Buildings Chancery Lane**
**London WC2A 1AT (GB)**

## Description

The present invention relates to a weaving welding method employing a welding robot, which enables a welding direction (weld line) to be corrected by the use preferably of an arc sensor and, more particularly, but not exclusively, to a weaving welding method which enables objects being welded (hereinafter referred to as "workpieces") having various thicknesses, to be welded suitably.

In a consumable electrode-type arc welding, a weaving welding method is employed which causes a welding torch to weave (rock) in a direction transversely of a weld line, in order to improve welding accuracy of a workpiece and to obtain a long leg length. In this welding method, typically, operating states of various operating sections of a welding robot, which include a hand holding a welding torch, are beforehand taught to the robot. That is, in a state in which a workpiece having workpiece halves whose respective joining faces are in contact with each other is arranged in predetermined positional relation to the robot, the operating states at a plurality of target points along an extending direction (hereinafter referred to as "groove center line") of the workpiece joining faces are taught beforehand to the robot (hereinafter referred to as "teaching of a predetermined locus to the robot"). Subsequently, the robot is run along the predetermined locus to perform requisite welding operation. However, there may be a case where even if the robot is run along the predetermined locus, an actual operating locus of the welding torch, that is the weld line, deviates from the groove center line of the workpiece, possibly due to workpiece machining errors, setting errors of the workpiece with respect to the robot, thermal strain during welding, and so on.

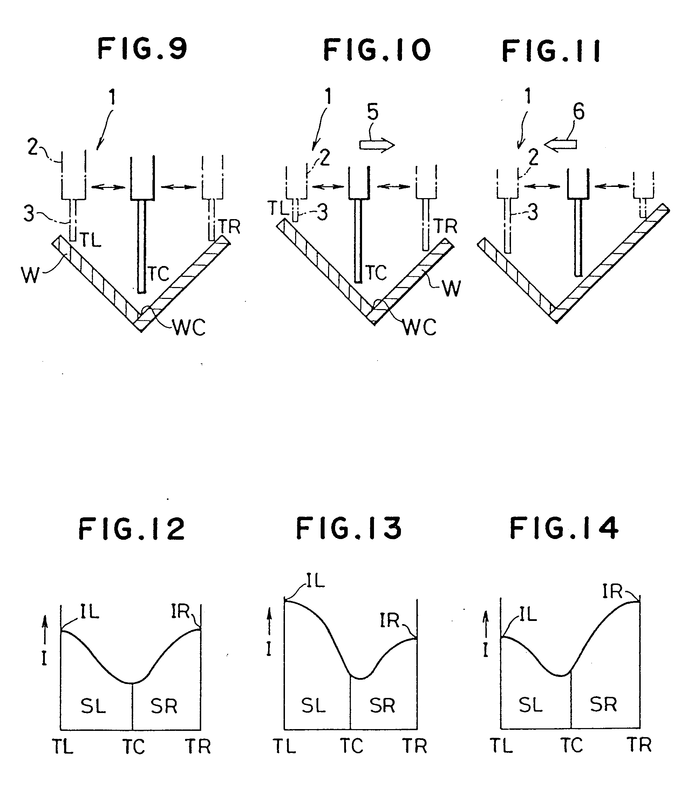

In order to correct the deviation, the welding direction is corrected typically as shown in Figs. 9 through 11. That is, a projecting length of a wire 3, i.e., a wire extension from a welding torch 1 (which torch is moved along a groove center line within a groove in a workpiece W and is caused to weave in a direction transversely of the groove center line with a groove center WC as a weaving center) is adjusted automatically in compliance with a weaving position of the welding torch. Welding current, which varies depending upon a change in the wire extension, is detected by an arc sensor. Then, it is judged, on the basis of the detecting result, whether or not the predetermined locus of the welding torch 1, which has beforehand been taught to the robot so as to be aligned with the groove center line, deviates from an actual required locus (weld line). The welding direction is corrected automatically on the basis of the judging result. In the figures, the reference numeral 2 denotes a contact tip for supplying electricity to the wire 3.

The correcting control of the welding direction will next be described further. Here, let it be supposed that a left-hand maximum amplitude position, a right-hand maximum amplitude position (hereinafter referred to as "left-hand end position" and "right-hand end position", respectively) and a central position of the welding torch 1 in the weaving direction are TL, TR and TC, respectively. When the weaving central position TC coincides with the groove center WC, the respective wire extensions at the opposite-end positions TL and TR are brought into coincidence with each other and, accordingly, respective welding currents IL and IR in both the positions are brought into coincidence with each other as shown in Fig. 12. On the other hand, in a state in which the weaving central position TC is deviated from the groove center WC as shown in Fig. 10 or Fig. 11, the respective welding current values IL and IR at the weaving opposite-end positions TL and TR are brought into inconsistency with each other. For instance, as shown in Fig. 10, if the weaving central position TC is deviated to the left with reference to the groove center WC, the wire extension at the weaving left-hand end position TL is shorter than that at the right-hand end position TR. Accordingly, as shown in Fig. 13, the welding current value IL at the left-hand end position TL is larger than the value IR at the right-hand end position. Conversely, as shown in Fig. 11, if the central position TC is deviated to the right, the welding current value IR is larger than the value IL as shown in Fig. 14.

Conventionally, therefore, the respective welding currents IL and IR at the weaving opposite-end positions TL and TR are detected by an arc sensor, and the position of the welding torch 1 in the weaving direction is controlled in such a manner that the detected welding currents are brought into coincidence with each other. In other words, the weaving central position TC is aligned with the groove center WC. That is, the welding torch 1 is moved in a direction indicated by an arrow 5 in the case illustrated in Fig. 10 or in a direction indicated by an arrow 6 in the case illustrated in Fig. 11, thereby aligning the weaving central position TC with the groove center WC.

Further, a method is known, in which, in order to correct the welding torch position, an integral value SL of the welding current between the weaving central position TC and the lefthand end position TL, and an integral value SR between the central position TC and the right-hand end position TR are obtained by an arc sensor, and the weaving central position TC of the welding torch 1 is corrected such that both the integral values coincide with each other (refer, for example, to Japanese Patent Application Laid-Open No. 57-124574).

With the above-mentioned conventional method, however, it is difficult to carry out welding from thin plates to thick plates by the same weaving pattern. That is, since the welding current decreases with an increase in the wire extension at the groove center WC and in the vicinity thereof, there may occur lack of penetration into the workpiece. This tendency is particularly marked in a case where the thick plate is welded. Therefore, the weaving speed is required to be lowered in proportion to an increase in thickness of the workpiece.

Furthermore, when particularly thin plates are welded, an effective amount of change in the wire extension and, hence, an amount of change in the welding current, occurring upon the welding torch being weaved, is reduced due to formation of a molten pool and a weld bead at the welding working location, so that the sensitivity of the welding-current detection by the arc sensor is lowered.

EP-A-0146085 discloses a weaving welding method employing a welding robot, in accordance with the precharacterising part of the attached claim 1. The welding wire extension is varied in dependence upon the weaving position of the welding torch, and the welding current is compared with a predetermined reference amount.

According to the present invention there is provided a weaving welding method employing a welding robot, wherein a workpiece having a substantially V-shaped internal section is welded along the internal groove centre line of the V-shape by the robot causing a welding torch to travel along a predetermined welding-direction locus while weaving in a direction transversely thereto, said predetermined welding-direction locus having been taught beforehand to the robot using a plurality of target points on said locus as weaving centre line, wherein during weaving welding the welding torch is moved along its own axial direction and the forward end of the welding wire is moved along the inner wall surfaces of the workpiece, characterised in that the forward end of the welding wire is maintained at a predetermined constant wire extension throughout the weaving welding process, the axial movement of the welding torch is such as to maintain the forward end of the welding wire at equal distances from the two inner walls of the workpiece at equal distances of the welding wire at opposite sides of the predetermined welding-direction locus when the welding line coincides accurately with the groove center line of the V-shape of the workpiece, the welding current at a distance at one side of the welding line is compared with the welding current at the same distance from said welding line at the opposite side thereof, and the position of the welding line is corrected to render these two welding currents equal should their comparison indicate that they differ from one another and thus that the welding line no longer coincides with said welding direction locus and said groove center line, the predetermined constant wire extension being maintained even when the welding line no longer coincides with said welding-direction locus and said groove center line, and throughout the correction procedure.

By utilizing the present invention it is possible to weld workpieces from thin plates to thick plates suitably by the same weaving pattern.

When a welding bead develops in the groove center line, the welding torch is caused to weave while being moved along the inner wall surfaces of the workpiece in a state in which the wire extension is maintained substantially at the predetermined length, and the effective wire extension at the central region in the weaving direction becomes shorter than that at each of the opposite ends in the weaving direction. With such arrangement, it is possible to avoid lack of penetration into the workpiece due to a reduction in the welding current at the aforesaid central region, whereby workpieces having various thicknesses and various leg lengths can be welded by the same weaving pattern and with high quality.

For a better understanding of the present invention and to show how it may be put into effect reference will now be made by way of example to the accompany drawings in which:

Fig. 1 is a partially cross-sectional diagrammatic front view showing a weaving welding method according to an embodiment of the invention, the method being illustrated in a normal state in which a central position of a welding torch in a weaving direction coincides with a groove center;

Fig. 2 is a view similar to Fig. 1, but showing a state in which the weaving central position is deviated to the left from the groove center;

Fig. 3 is a view similar to Fig. 1, but showing a state in which the weaving central position is deviated to the right from the groove center;

Fig. 4 is a graph showing the relationship between welding current and the weaving position in the state illustrated in Fig. 1;

Fig. 5 is a graph similar to Fig. 4, in relation to the state illustrated in Fig. 2;

Fig. 6 is a graph similar to Fig. 4, in relation to the state illustrated in Fig. 3;

Fig. 7 is a partially cross-sectional diagrammatic front view of a change in effective wire extension in the weaving direction due to presence of molten metal and a modification of a moving path of the welding torch, in the weaving welding method according to the above-mentioned embodiment;

Fig. 8 is a diagrammatic perspective view of a workpiece having a corner point in the welding direction, the weaving welding method according to the above-mentioned embodiment being applied to the workpiece;

Fig. 9 is a view similar to Fig. 1, but showing a conventional weaving welding method;

Fig. 10 is a view similar to Fig. 2, but showing the conventional method;

Fig. 11 is a view similar to Fig. 3, but showing the conventional method;

Fig. 12 is a graph showing a change in welding current in relation to the state illustrated in fig. 9;

Fig. 13 is a graph similar to Fig. 12, in relation to the state illustrated in Fig. 10;

Fig. 14 is a graph similar to Fig. 12, in relation to the state illustrated in Fig. 11; and

Fig. 15 is a diagrammatic block diagram illustrating, by way of example, a welding robot for carrying into effect the weaving welding method according to the above-mentioned embodiment of the invention.

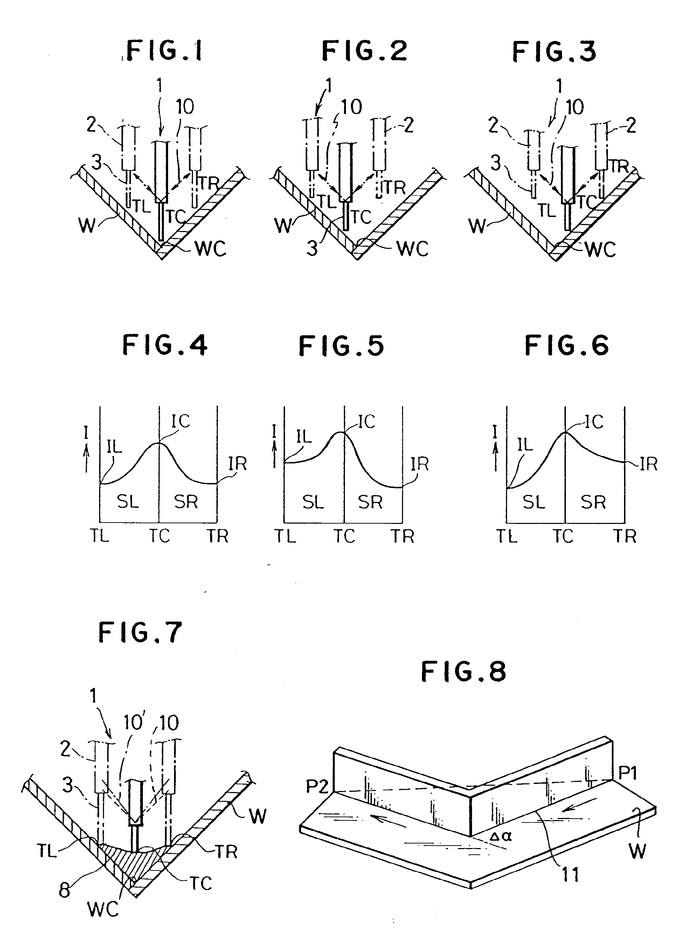

Referring to Fig. 1, a workpiece W consists of first and second workpiece halves to be joined to each other. Prior to welding operation, both the workpiece halves are set at a predetermined position in a robot system of coordinates set in a welding robot to be described later and in such a manner that a predetermined angle (hereinafter referred to as "groove angle") is defined between the workpiece halves. In the figure, a joining face between both the workpiece halves (a side edge of the joining face on the side of a torch 1 will hereinafter be referred to as "groove center line") extends perpendicularly to the drawing sheet. Reference numerals 2 and 3 denote a contact tip and a wire of the welding torch 1, respectively.

In a weaving welding method according to the embodiment, the welding torch 1 mounted to a wrist of the welding robot is moved along the groove center line of the workpiece W and is caused to weave (rock) in a direction transversely of the groove center line, with a groove center WC as a weaving center and at a predetermined angle with respect to the groove center line as viewed from the side of the welding torch 1, that is, from a location above the workpiece W. The weaving of the welding torch 1 takes place centering around the central position TC and between a left-hand maximum amplitude position (hereinafter referred to as "left-hand end position") TL and a right-hand maximum amplitude position (hereinafter referred to as "right-hand end position") TR. Further, the weaving of the welding torch 1 is performed under such a condition that a projecting length of the wire 3, i.e., wire extension from the contact tip 2 and a distance between the forward end of the wire 3 and a wall surface of both the workpiece halves on the side of the welding torch are maintained substantially constant. That is, as viewed in a cross-sectional plane of the workpiece W, the welding torch 1 moves substantially parallel to the wall surface of the workpiece W in such a manner that a torch moving position in a torch axial direction and in a direction transversely of the groove center line, which corresponds to the position of the forward end of the wire 3 at the time the torch takes the weaving central position TC, serves as a flexional point. Accordingly, the welding torch 1 moves also in a welding-torch axial direction in addition to the direction along the groove center line and the direction transversely of the groove center line. Since the welding torch performs such movement, a predetermined welding-torch locus including these three moving-direction components is taught beforehand to the robot.

During welding operation, the wire 3 serving as a consumable electrode is fed toward the workpiece W in a manner known conventionally, such that the wire extension 3 is maintained substantially at a predetermined value regardless of the weaving position of the welding torch 1. On the other hand, as shown in Fig. 7, since molten metal 8 forming a weld bead exists at the welding working location, the effective wire extension 3 at the weaving central position TC of the welding torch 1 and in the vicinity of the weaving central position is shorter than the effective wire extension at the weaving opposite-end positions TL and TR and in the vicinity thereof. As a result, the welding current at the time the welding torch 1 is in the central region in the weaving direction increases more than that at the time the welding torch is in each of the opposite ends, so that it is possible to relieve lack of penetration of the wire 3 into the workpiece W, due to lowering of the welding current at the central region in the weaving direction, which has occurred in the conventional method.

During normal welding operation, as shown in Fig. 1, the moving locus (weld line) of the welding torch 1 in the welding direction is brought into coincidence with the predetermined welding-direction locus taught to the robot and, accordingly, the groove center WC of the workpiece W is aligned with the weaving central position of the welding torch 1. That is, when the welding torch 1 is in the weaving central position TC, the forward end of the wire 3 is aligned with the groove center WC. In this case, the welding torch 1 moves along a predetermined locus in the torch axial direction and in a direction transversely of the groove center line, in which the moving direction of the welding torch 1 changes with the torch moving position in the torch axial direction and in the weaving direction at the time the torch is in the central position TC, as the weaving center and by the same angle as the groove angle at this weaving center (flexional point). That is, the welding torch 1 moves substantially parallel to the workpiece wall surface in a state in which the forward end of the wire 3 is spaced a predetermined distance from the wall surface of the workpiece W. As shown in Fig. 4, the welding current takes a maximum value IC when the welding torch 1 is in the weaving central position TC, while the welding current takes minimum values IL and IR which are equal to each other, when the welding torch 1 is in the opposite-end positions TL and TR. Further, respective integral values SL and SR of the welding current during periods within which the welding torch 1 moves from the weaving left-hand end position TL to the central position TC and from the central position TC to the right-hand end position TR (hereinafter referred to as "left-hand weaving 1/4 cycle" are "right-hand weaving 1/4 cycle", respectively) are equal to each other.

On the other hand, as shown in Fig. 2, in case where an actual weld line is deviated to the left from the predetermined welding-direction locus, the distance between the forward end of the wire 3 and the wall surface of the workpiece W decreases when the welding torch 1 takes the weaving left-hand end position TL, while the distance between them increases when the welding torch takes the right-hand end position TR. As a result, as shown in Fig. 5, the welding current at the weaving left-hand end position TL is larger than that at the right-hand end position TR, and the welding-current integral value SL of the left-side weaving 1/4 cycle is larger than the integral value SR of the right-side weaving 1/4 cycle. Moreover, as shown in Fig. 3, when the actual weld line is deviated to the right from the predetermined locus, the welding current IR at the weaving right-hand end position TR is larger than the welding current IL at the left-hand end position TL, and the integral value SR of the right-hand 1/4 cycle is larger than the integral value SL of the left-hand 1/4 cycle.

As described above, when the actual weld line is deviated from the predetermined locus, the weaving-direction position of the welding torch 1 and, hence, the welding direction is rectified. That is, if the welding current IL at the weaving left-hand end position TL detected by an arc sensor to be described later is larger than the welding current IR at the right-hand end position TR, a control device of the robot to be described later judges as being the case illustrated in Fig. 2, to rectify the welding direction in such a manner that the actual weld line shifts to the right until both the welding currents IL and IR are made equal to each other. On the other hand, if the detected welding current IR at the weaving right-hand end position TR is larger than the detected welding current IL at the left-hand end position TL, the control device judges as being the case illustrated in Fig. 3, to rectify the welding direction in such a manner that the actual welding line shifts to the left. As a result, when the actual weld line is deviated from the groove center line due to manufacturing errors of the workpiece W, setting errors in the robot system of coordinates, thermal strain of the workpiece W during welding, or the like, the deviation is immediately rectified so that welding is performed along the groove center line.

In the embodiment described above, the welding direction is rectified on the basis of the result of comparison between the respective detected welding currents IL and IR at the weaving opposite-end positions. Alternatively, however, the arrangement may by such that the welding-current integral values SL and SR regarding the respective left-hand and right-hand weaving 1/4 cycles are detected by the use of the arc sensor, and the welding direction is rectified on the basis of the result of comparison between both the integral values. That is, when the integral value SL of the left-hand weaving 1/4 cycle is larger than the integral value SR of the right-hand weaving 1/4 cycle, the welding torch 1 is shifted to the right until both the integral values are made equal to each other, while when the integral value SL is smaller than the integral value SR, the welding torch 1 is shifted to the left.

Further, in the embodiment described above, the welding torch 1 is moved parallel to the workpiece wall surface as indicated by the broken lines in Fig. 7. In this connection, however, there may be a case where a change in the welding current attendant upon the torch movement is reduced, depending upon the welding conditions and the groove configuration, so that the detecting sensitivity on deviation of the actual weld line from the groove center line become insufficient. In such case, the flexional angle of the torch moving locus at the weaving central position TC may be set to an angle more acute than the workpiece groove angle, so that the welding current at each of the weaving opposite-end positions is reduced to increase the welding current change, thereby raising the detecting sensitivity.

The weaving welding method according to each of the embodiment and the modification described above can be applied also to a case where a groove center line 11 in a workpiece W has a corner point, as shown in Fig. 8. In this case, if teaching to the robot is carried out at a welding start point P1 and a welding termination point P2, welding is executed along the groove center line 11 while rectifying the welding direction. In the figure, the symbol $\Delta\alpha$ indicates an angle of the corner point which is 26 degrees, for example.

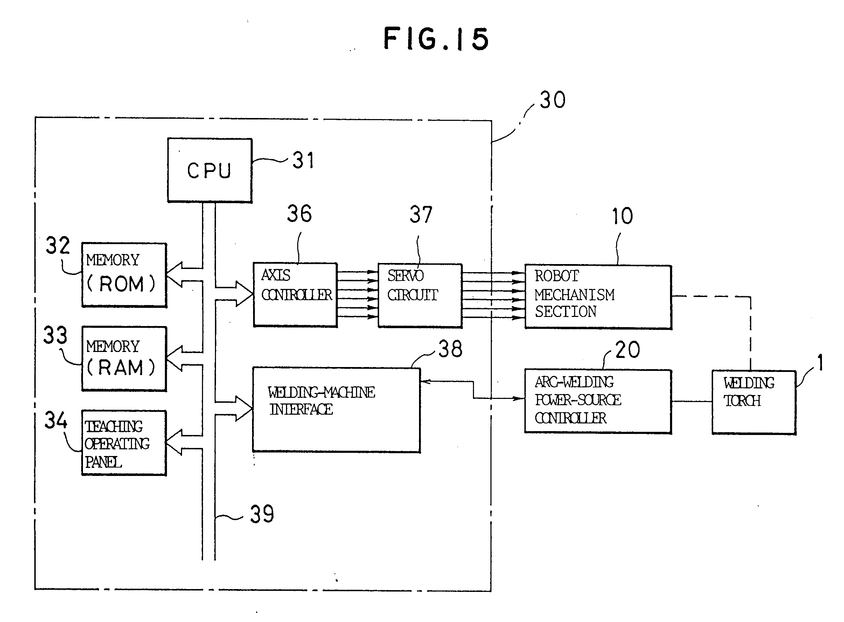

Fig. 15 illustrates, by way of example, a welding robot for carrying into effect the weaving welding method according to each of the embodiment and the modification described above. The welding robot is constructed fundamentally in a manner known conventionally, that is, comprises a robot mechanism section 10 including a wrist having mounted thereto the welding torch 1, an arc-welding power-source controller 20 connected to the welding torch 1, and a control device 30 for controlling the robot mechanism section and the controller. The control device 30 includes a central processing unit (hereinafter referred to as "CPU") 31, a ROM memory 32, a RAM memory 33, a teaching operating panel 34, an axis controller 36 and a welding-machine interface 38 which are connected to the CPU 31 through a bus 39, and a servo circuit 37 connected to the axis controller 36, for drivingly controlling servomotors (illustration omitted) for various axes of the robot mechanism section 10.

The welding robot operates in the manner described with reference to Figs. 1 through 8. Saying in addition, during teaching to the robot, the robot is manipulated through the teaching operating panel 34, and detecting data representative of the operating states of the various portions of the robot from various sensors (illustration omitted) arranged respectively at various portions of the robot mechanism section 10 are stored in the RAM memory 33 through an input/output circuit, not shown. During welding, the welding current is read by the CPU 31 through the welding-machine interface 38. That is, the CPU 31 functions also as an arc sensor.

## Claims

1. A weaving welding method employing a welding robot, wherein a workpiece (W) having a substantially V-shaped internal section is welded along the internal groove centre line (WC) of the V-shape by the robot causing a welding torch (1) to travel along a predetermined welding-direction locus while weaving in a direction transversely thereto, said predetermined welding-direction locus having been taught beforehand to the robot using a plurality of target points on said locus as weaving centre line, wherein during weaving welding the welding torch (1) is moved along its own axial direction and the forward end of the welding wire (3) is moved along the inner wall surfaces of the workpiece (W), characterised in that the forward end of the welding wire (3) is maintained at a predetermined constant wire exension throughout the weaving welding process, the axial movement of the welding torch (1) is such as to maintain the forward end of the welding wire (3) at equal distances from the two inner walls of the workpiece at equal distances (e.g. TL, TR) of the welding wire (3) at opposite sides of the predetermined welding-direction locus when the welding line coincides accurately with the groove center line (WC) of the V-shape of the workpiece (W), the welding current (IL) at a distance (TL) at one side of the welding line is compared with the welding current (IR) at the same distance (TR) from said welding line at the opposite side thereof, and the position of the welding line is corrected to render these two welding currents (IL,IR) equal should their comparison indicate that they differ from one another and thus that the welding line no longer coincides with said welding-direction locus and said groove center line (WC), the predetermined constant wire extension being maintained even when the welding line no longer coincides with said welding-direction locus and said groove center line (WC), and throughout the correction procedure.

2. A weaving welding method employing a welding robot according to claim 1, wherein during weaving said welding torch (1) is moved in such a manner that the forward end of said welding wire (3) moves parallel to the inner wall surfaces of the workpiece (W).

3. A weaving welding method employing a welding robot according to claim 1, wherein during weaving said welding torch (1) is moved in such a manner that the forward end of said welding wire (3) moves along a predetermined weaving locus (10') extending in said direction transversely of said predetermined welding-direction locus and in said torch axial direction, at an angle more acute than the internal angle defined by the wall surfaces of the workpiece (W).

4. A weaving welding method employing a welding robot according to claim 1, 2 or 3, wherein said welding current comparison takes place between the welding current (IL) at the time said welding torch (1) takes one maximum amplitude position (TL) in said direction transversely of said predetermined welding-direction locus, and the welding current (IR) at the time said welding torch (1) takes an opposite maximum amplitude position (TR) in this transverse direction.

5. A weaving welding method employing a welding robot according to claim 1, 2 or 3, wherein said welding current comparison takes place between a welding-current integral value in one weaving 1/4 cycle with reference to a central position of said weaving torch (1) in said direction transversely of said predetermined welding-direction locus, and a welding-current integral value in another weaving 1/4 cycle at the opposite side of said central position.

## Patentansprüche

1. Pendelschweißverfahren, das einen Schweiß-Roboter benutzt, wobei ein Werkstück (W), das ein im wesentlichen W-förmiges Innenprofil hat, längs der Innennut-Mittellinie (WC) der V-Form durch den Roboter geschweißt wird, was einen Schweißkopf (1) veranlaßt, sich längs einer vorbestimmten Schweißrichtungs-Ortskurve zu bewegen, während er in einer Richtung quer dazu pendelt, welche vorbestimmte Schweißrichtungs-Ortskurve der Roboter vorab durch Benutzung einer Vielzahl von Zielpunkten auf der Ortskurve als eine Pendelmittellinie eingelernt bekommen hat, wobei der Schweißkopf (1) während des Pendelschweißens längs seiner eigenen Axialrichtung bewegt wird und das vordere Ende des Schweißdrahts (3) längs der Innenwandoberflächen des Werkstücks (W) bewegt wird, dadurch **gekennzeichnet**, daß das vordere Ende des Schweißdrahts (3) bei einer vorbestimmten konstanten Drahtausdehnung über den gesamten Pendelschweißvorgang hinweg gehalten wird, die axiale Bewegung des Schweißkopfes (1) derart ist, daß das vordere Ende des Schweißdrahts (3) bei gleichen Abständen von den zwei Innenwänden des Werkstücks bei gleichen Abständen (z. B. ZL, TR) des Schweißdrahts (3) auf sich gegenüberliegenden Seiten der vorbestimmten Schweißrichtungs-Ortskurve gehalten wird, wenn die Schweißlinie mit der Innennut-Mittellinie (WC) der V-Form des Werksticks (W) zusammenfällt, der Schweißstrom (IL) bei einem Abstand (TL) auf einer Seite der Schweißlinie mit dem Schweißstrom (IR) bei dem gleichen Abstand (TR) von der Schweißlinie auf der gegenüberliegenden Seite davon verglichen wird und die Position der Schweißlinie korrigiert wird, um diese zwei Schweißströme (IL, IR) gleich zu machen, falls deren Vergleich ergibt, daß sie sich voneinander unterscheiden und demzufolge die Schweißlinie nicht länger mit der Schweißrichtungs-Ortskurve und der Innennut-Mittelinie (WC) zusammenfällt, wobei die vorbestimmte konstante Drahtausdehnung selbst dann, wenn die Schweißlinie nicht länger mit der Schweißrichtungs-Ortskurve und der Innennut-Mittellinie (WC) zusammenfällt, und über den Korrekturvorgang hinweg beibehälten wird.

2. Pendelschweißverfahren, das einen Schweißroboter benutzt, nach Anspruch 1, bei dem während des Pendelns der Schweißkopf (1) in einer derartigen Weise bewegt wird, daß sich das vordere Ende des Schweißdrahts (3) parallel zu den Innenwandoberflächen des Werkstücks (W) bewegt.

3. Pendelschweißverfahren, das einen Schweißroboter benutzt, nach Anspruch 1, bei dem während des Pendelns der Schweißkopf (1) in einer derartigen Weise bewegt wird, daß sich das vordere Ende des Schweißdrahts (3) längs einer vorbestimmten Pendel-Ortskurve (10'), die sich in der Richtung quer zu der vorbestimmten Schweißrichtungs-Ortskurve erstreckt, und in der Schweißkopf-Axialrichtung bei einem Winkel, der spitzer als der innere Winkel, welcher durch die Wandoberflächen des Werkstücks (W) definiert ist, bewegt.

4. Pendelschweißverfahren, das einen Schweißroboter benutzt, nach Anspruch 1, 2 oder 3, bei dem der Schweißstromvergleich zwischen dem Schweißstrom (IL) zu dem Zeitpunkt, bei dem der Schweißkopf (1) eine Maximalauslenkungsposition (TL) in der Richtung quer zu der vorbestimmten Schweißrichtungs-Ortskurve einnimmt, und dem Schweißstrom (IR) zu dem Zeitpunkt, bei dem der Schweißkopf (1) eine entgegengesetzte Maximalauslenkungsposition (TR) in dieser Querrichtung einnimmt, stattfindet.

5. Pendelschweißverfahren, das einen Schweißroboter benutzt, nach Anspruch 1, 2 oder 3, bei dem der Schweißstromvergleich zwischen einem Schweißstromintegralwert in einem PendelViertelzyklus mit Bezug auf eine zentrale Position des pendelnden Schweißkopfes (1) in der Richtung quer zu der vorbestimmten Schweißrichtungs-Ortskurve und einem Schweißstromintegralwert in einem weiteren Pendel-Viertelzyklus auf der gegenüberliegenden Seite der zentralen Position stattfindet.

**Revendications**

1. Procédé de soudage à mouvement alterné utilisant un robot de soudage, dans lequel une pièce d'ouvrage (W) ayant une section interne de forme sensiblement en V est soudée le long de la ligne centrale de canal (WC) interne de la forme en V par le robot en faisant en sorte qu'une torche de soudage (1) se déplace le long d'un lieu géométrique de direction de soudage prédéterminé tout en ondulant dans une direction transversale à celle-ci, ledit lieu géométrique de direction de soudage prédéterminé ayant été appris au préalable au robot en utilisant une pluralité de points cibles sur ledit lieu géométrique comme ligne centrale d'ondulation, dans lequel pendant le soudage à mouvement alterné la torche de soudage (1) est déplacée le long de sa propre direction axiale et l'extrémité avant du fil de soudage (3) est déplacée le long des surfaces des parois intérieures de la pièce d'ouvrage (W), caractérisé en ce que l'extrémité avant du fil de soudage (3) est maintenue à une saillie de fil constante prédéterminée au cours du processus de soudage à mouvement alterné, en ce que le déplacement axial de la torche de soudage (1) est tel qu'il maintient l'extrémité avant du fil de soudage (3) à des distances égales par rapport aux deux parois intérieures de la pièce d'ouvrage (W) à des distances égales (par exemple TL et TR) du fil de soudage (3) sur les côtés opposés du lieu géométrique de direction de soudage prédéterminé lorsque la ligne de soudage coïncide de manière précise avec la ligne centrale de canal (WC) de la forme en V de la pièce d'ouvrage (W), en ce que le courant de soudage (IL) à une certaine distance (TL) d'un côté de la ligne de soudage est comparé avec le courant de soudage (IR) à la même distance (TR) de ladite ligne de soudage du côté opposé de celle-ci, et en ce que la position de la ligne de soudage est corrigée pour rendre ces deux courants de soudage (IL, IR) égaux au cas où leur comparaison indique qu'ils sont différents l'un de l'autre et ainsi que la ligne de soudage ne coïncide plus avec ledit lieu géométrique de direction de soudage et ladite ligne centrale de canal (WC), la saillie de fil constante prédéterminée étant maintenue même lorsque la ligne de soudage ne coïncide plus avec ledit lieu géométrique de direction de soudage et ladite ligne centrale de canal (WC), et tout au long de la procédure de correction.

2. Procédé de soudage à mouvement alterné utilisant un robot soudeur selon la revendication 1, dans lequel pendant l'ondulation ladite torche de soudage (1) est déplacée de manière à ce que l'extrémité avant dudit fil de soudage (3) se déplace parallèlement aux surfaces de paroi intérieures de la pièce d'ouvrage (W).

3. Procédé de soudage à mouvement alterné utilisant un robot soudeur selon la revendication 1, dans lequel pendant l'ondulation ladite torche de soudage (1) est déplacée de manière à ce que l'extrémité avant dudit fil de soudage (3) se déplace le long d'un lieu géométrique d'ondulation prédéterminé (10') s'étendant à ladite direction transversale par rapport audit lieu géométrique de direction de soudage prédéterminé et dans ladite direction axiale de la torche, selon un angle plus aigu que l'angle interne défini par les surfaces de paroi de la pièce d'ouvrage (W).

4. Procédé de soudage à mouvement alterné utilisant un robot soudeur selon la revendication 1, 2 ou 3, dans lequel ladite comparaison de courant de soudage a lieu entre le courant de soudage (IL) au moment où ladite torche de soudage (1) prend une position d'amplitude maximale (TL) dans ladite direction transversale par rapport audit lieu géométrique de la direction de soudage prédéterminé, et le courant de soudage (IR) au moment où ladite torche de soudage (1) prend une position d'amplitude maximale opposée (TR) dans cette direction transversale.

5. Procédé de soudage a mouvement alterné utilisant un robot soudeur selon la revendication 1, 2 ou 3, dans lequel ladite comparaison de courant de soudage a lieu entre une valeur intégrale de courant de soudage dans un 1/4 de cycle d'ondulation se référant à une position centrale de ladite ondulation de la torche de soudage (1) dans ladite direction transversale par rapport audit lieu géométrique de soudage prédéterminé, et une valeur intégrale de courant de soudage dans un autre 1/4 de cycle d'ondulation du côté opposé de ladite position centrale.

## FIG.1

## FIG.2

## FIG.3

## FIG.4

## FIG.5

## FIG.6

## FIG.7

## FIG.8

# FIG.9

# FIG.10

# FIG.11

# FIG.12

# FIG.13

# FIG.14

# FIG.15

EP 0 338 078 B1